(19) Europäisches Patentamt / European Patent Office / Office européen des brevets

(11) **EP 2 645 871 B1**

(12) **EUROPEAN PATENT SPECIFICATION**

(45) Date of publication and mention
of the grant of the patent:
**07.01.2015 Bulletin 2015/02**

(21) Application number: **11796650.7**

(22) Date of filing: **29.11.2011**

(51) Int Cl.:
**A23D 9/007** (2006.01)

(86) International application number:
**PCT/EP2011/071260**

(87) International publication number:
**WO 2012/072624 (07.06.2012 Gazette 2012/23)**

(54) **OILS AND FATS WITH IMPROVED SPATTERING BEHAVIOUR**

ÖLE UND FETTE MIT VERBESSERTEM SPRITZVERHALTEN

HUILES ET GRAISSES À COMPORTEMENT DE PROJECTION AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2010 EP 10193481**

(43) Date of publication of application:
**09.10.2013 Bulletin 2013/41**

(73) Proprietors:
• **Unilever PLC**
**London EC4Y 0DN (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **ALDRED, Deborah, Lynne**
**Bedfordshire MK44 1LQ (GB)**
• **BOT, Arjen**
**NL-3133 AT Vlaardingen (NL)**

(74) Representative: **van Benthum, Wilhelmus A. J.**
**Unilever N.V.**
**Unilever Patent Group**
**Olivier van Noortlaan 120**
**3133 AT Vlaardingen (NL)**

(56) References cited:
**EP-A1- 2 052 628        US-A1- 2004 109 930
US-A1- 2008 305 237**

• **LINDER ET AL: "Hydrophobins: the protein-amphiphiles of filamentous fungi", FEMS MICROBIOLOGY REVIEWS, ELSEVIER, AMSTERDAM, NL, vol. 29, no. 5, 1 November 2005 (2005-11-01), pages 877-896, XP005107912, ISSN: 0168-6445, DOI: DOI:10.1016/J.FEMSRE. 2005.01.004**

## Description

### TECHNICAL FIELD

The invention relates to oils and fats showing improved spattering behaviour when used for shallow frying.

### BACKGROUND AND PRIOR ART

The use of oils and fats for frying often is accompanied by spattering. Spattering is an issue for all cooking products, but can be especially violent for oil.

Usually a distinction is made between primary spattering and secondary spattering. Primary spattering occurs when a frying product is an emulsion phase containing a dispersed aqueous phase. When heating the emulsion to a temperature over 100°C the dispersed water will evaporate under more or less spattering. Primary spattering is usually not an issue for oils, because the very small amounts of water that can be dissolved in oil can evaporate in an orderly fashion during heating.

With secondary spattering is denoted spattering which occurs when water or a water containing food product such as meat is brought into a heated frying oil. Secondary spattering is usually very violent in oil compared to frying products based on emulsions.

Despite this clear disadvantage of using oil as a cooking aid, many consumers prefer to continue to use oil as their deep or shallow frying medium. The present invention is related particularly to a method for improving secondary spattering behaviours of edible oil from which water is essentially absent. Primary and secondary spattering behaviours are measured by determining the spattering values SV1 and SV2 according to a protocol as specified in the examples section.

Common anti-spattering agents comprise emulsifiers in a broad sense e.g. lecithin, hydrolysed lecithin, esters of citric acid (Citrem™) and cooking salt. The effect of sole lecithin on spattering is small. When lecithin is used in combination with cooking salt, well performing cooking emulsions having SV2 values up to 8 can be achieved. Lecithin, however, has the disadvantage that it may decompose at high frying temperatures and causes bad smell, discoloration and foaming. The cooking salt (specifically sodium chloride) is not recommended from a nutritional point of view, but has to be added in a substantial amount, exceeding 0.3 wt.% to get good spattering behaviour.

For improving spattering behaviour EP 477825 and EP 771531 disclose the use of citric acid esters as synthetic antioxidants.

US 3,946,122 and US 5,436,021 disclose water and oil emulsions comprising a citric acid ester of a mono- or diglyceride of fatty acids.

WO 01/84945 uses a citric ester of a partial fatty acid glyceride which results in SV2 values of at least 4.

EP 775444 discloses a pourable emulsion composition comprising herbs, spices, nuts or seeds and 1-10 wt% salt.

WO 03/051136 discloses a transparent oil which contains stably dispersed particles which may have a vegetable origin.

EP2052628 describes an aerated fat continuous product wherein a foam is produced by aerating a solution of hydrophobine. The foam being then introduced in a chocolate. Even after having been drained, the foam, before its introduction had a water to hydrophobin ratio of 1:0.0005.

A relatively high salt content is typical for most prior art cooking oils which show an improved spattering behaviour. The presently available alternatives for lecithin and cooking salt consist of non-natural substances.

H. Pardun, in Fette,Seifen, Anstrichmittel 79(5), 1977, pp. 195-203 describes the use of milled soy protein concentrates as antispattering agents in margarines. The antispattering agents proposed by Pardun have the disadvantage that when heated in the pan during shallow frying, they may decompose and give char formation. Moreover, we have found that when margarines of Pardun are prepared using modern margarine equipment, such as a votator, the antispattering agents are no longer effective.

### TESTS AND DEFINITIONS

Determination of spattering value in a spattering test

Primary spattering (SV1) was assessed under standardised conditions in which an aliquot of a food product was heated in a glass dish and the amount of oil spattered onto a sheet of paper held above the dish was assessed after the water content of the food product had been evaporated by heating.

Secondary spattering (SV2) was assessed under standardised conditions in which the amount of oil spattered onto a sheet of paper held above the dish is assessed after injection of a quantity of 0.5 ml water into the dish.

In assessment of both primary and secondary spattering value, 25 g food product was heated in a 15 cm diameter glass bowl on an electric plate to about 205 °C. The oil that spattered out by force of expanding evaporating water droplets was caught on a sheet of paper situated at 25 cm above the pan (SV1 test). Subsequently a quantity of 0.5 ml water was poured into the bowl and again the oil that spattered out of by force of expanding evaporating water droplets was caught on a sheet of paper situated above the pan (SV2 test).

The images obtained were compared with a set of standard pictures number 0-10 whereby the number of the best resembling picture was recorded as the spattering value. 10 indicates no spattering and zero indicates very bad spattering. The general indication is as follows in table 1.

Table 1: Scoring table for spattering value

**Table 1**

| Score | Comments |
|---|---|
| 10 | Excellent |
| 8 | Good |
| 6 | Passable |
| 4 | Unsatisfactory for SV1, almost passable for SV2 |
| 2 | Very poor |

A typical oil scores 10 for primary spattering (SV1) and less than 2 for secondary spattering (using 0.5 ml water). Typical results for household margarines (80 wt.% fat) are 8.5 for primary spattering (SV1) and 4.6 for secondary spattering (SV2) under the conditions (using 10 ml water; traditionally a higher amount of water is used for emulsions because their performance on the secondary spattering test is much better than for oils). Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$Xn-C-X_{5-9}-C-C-X_{11-39}-C-X_{8-23}-C-X_{5-9}-C-C-X_{6-18}-C-Xm \qquad \text{(SEQ ID No. 1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$Xn-C-X_{1-50}-C-X_{0-5}-C-X_{1-100}-C-X_{1-100}-C-X_{1-50}-C-X_{0-5}-C-X_{1-50}-C-Xm \qquad \text{(SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as Actinomycete and Steptomyces sp. (WO01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as Cryphonectria parasitica which secretes a hydrophobin termed cryparin (MacCabe and Van Alfen, 1999, App. Environ. Microbiol. 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in Agaricus bisporus; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera Saccharomyces, Kluyveromyces, Pichia, Hansenula, Candida, Schizo saccharomyces and the like, and filamentous species such as (but not limited to) those of the genera Aspergillus, Trichoderma, Mucor, Neurospora, Fusarium and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term " hydrophobins" .

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Oil

As used herein the term " oil" is used as a generic term for lipids and fats either pure or containing compounds in solution. Oils can also contain particles in suspension.

Lipids

As used herein the term " lipids" is used as a generic term for oil-soluble compounds. These include for example long chain fatty acids or long chain alcohols wherein the term " long chain" is used as a generic term for 12 carbon atoms or more. These also include compounds that are soluble in oil at higher temperatures but solidify at lower temperatures, and are thus able to form a network that entraps the liquid oil in the mixture (cf Pemetti et al, 2007, Curr. Opin. Colloid Interface Sci. 12:221-231).

Fats

As used herein the term " fats" is used as a generic term for compounds containing more than 80% triglycerides. They can also contain diglycerides, monoglycerides and free fatty acids. In common language, liquid fats are often referred to as oils but here the term fats is used as a generic term for solid and liquid fats. Fats include: plant oils (for example: Allanblackia Oil, Apricot Kernel Oil, Arachis Oil, Mica Oil, Argan Oil, Avocado Oil, Babassu Oil, Baobab Oil, Black Seed Oil, Blackberry Seed Oil, Blackcurrant Seed Oil, Blueberry Seed Oil, Borage Oil, Calendula Oil, Camelina Oil, Camellia Seed Oil, Castor Oil, Cherry Kernel Oil, Cocoa Butter, Coconut Oil, Corn Oil, Cottonseed Oil, Evening Primrose Oil, Grapefruit Oil, Grapeseed Oil, Hazelnut Oil, Hempseed Oil, Jojoba Oil, Lemon Seed Oil, Lime Seed Oil, Linseed Oil, Kukui Nut Oil, Macadamia Oil, Maize Oil, Mango Butter, Meadowfoam Oil, Melon Seed Oil, Moringa Oil, Olive Oil, Orange Seed Oil, Palm Oil, Palm Kernel Oil, Papaya Seed Oil, Passion Seed Oil, Peach Kernel Oil, Plum Oil, Pomegranate Seed Oil, Poppy Seed Oil, Pumpkins Seed Oil, Rapeseed (or Canola) Oil, Red Raspberry Seed Oil, Rice Bran Oil, Rosehip Oil, Safflower Oil, Seabuckthorn Oil, Sesame Oil, Soyabean Oil, Strawberry Seed Oil, Sunflower Oil, Sweet Almond Oil, Walnut Oil, Wheat Germ Oil); fish oils (for example: Sardine Oil, Mackerel Oil, Herring Oil, Cod-liver Oil, Oyster Oil); animal oils (for example: butter or Conjugated Linoleic Acid); or any mixture and/or fraction and/or hardening and/or interesterification thereof.

Aeration

The term " aerated" means that gas has been intentionally incorporated into the product, such as by mechanical means. The gas can be any gas, but is preferably, particularly in the context of food products, a food-grade gas such as air, nitrogen or carbon dioxide. The extent of aeration is typically defined in terms of "overrun". In the context of the present invention, overrun (in percent) is defined in volume terms as:

$$\text{Overrun} = ((\text{volume of the final aerated product} - \text{ volume of the mix}) / \text{volume of the mix}) \times 100$$

## SUMMARY OF THE INVENTION

It is therefore an object of the invention to provide an edible oil having a good spattering performance in shallow frying. Still one more object of the invention is to provide an edible oil which allows the formation of a stable foam when water is added while cooking, e.g. to make a sauce, therefore not only reducing secondary spattering but also creating a unique food product.

One or more of this objects are attained according to the invention which provides an edible oil with an overrun of less than 15%, preferably less than 10%, even more preferably less than 5% which comprises 0.01% to 1 % w/w of hydrophobin and wherein the water content is such that the water/hydrophobin weight ratio is less than 1:5, preferably less than 1:10.

Preferably also the edible oil food product contains less than 0.5% w/w hydrophobin, more preferably less than 0.1 % w/w, even more preferably less than 0.025% w/w.

Preferably also the hydrophobin is a class II hydrophobin, more preferably HFB II.

## DETAILS OF THE INVENTION

The following examples illustrate the invention.

Example. Shallow frying behaviour of margarines and butter with HFBII, HFBI and other proteins Material and Methods

Hydrophobin, as a freeze dried powder, was incorporated into the edible oil to give hydrophobin levels of 0.1 %.

These samples were then evaluated for their spattering performance using the standard method described above.

**Table 2**

|  | SV1 | SV2 |
|---|---|---|
| Ref Sunflower oil | 10 | 1 |
| Sunflower oil + 0.01% freeze-dried HFB II | 10 | 4 |
| Sunflower oil + 0.025% freeze-dried HFB II | 10 | 6.25 |
| Sunflower oil + 0.05% freeze-dried HFB II | 10 | 7 |
| Sunflower oil + 0.1 % freeze-dried HFB II | 10 | 8.25 |
| Sunflower oil + 0.1% freeze-dried HFB I | 10 | 8.5 |

Because the spattering values were so good, a further experiment was done measuring SV2 but this time by adding 10ml water instead of 0.5ml. The results are still very good.

**Table 3**

|  | SV1 | SV2 |
|---|---|---|
| Sunflower oil + 1.0% HFB II | 10 | 8 |

Other proteins were tested to prove the unique and unexpected improvement brought by hydrophobins.

**Table 4**

|  | SV1 | SV2 |
|---|---|---|
| Sunflower oil + 0.1 % zein (maize) | 10 | 1 |
| Sunflower oil + 0.1% soy flour | 10 | 2 |
| Sunflower oil + 0.1 % hydrolysed wheat protein | 10 | 5 |

Results

When the primary spattering performance (SV1) are considered for all samples, it can be seen that the results are perfect. No benefit can be seen of the addition of hydrophobin.

It can be seen that the secondary spattering performance (SV2) is improved as the hydrophobin level was increased, however even at 0.01% significant improvements in all samples were noticed. When water was added to the heated oils, a certain amount of foaming occurs, both in the control and in those containing hydrophobin, as the water phase heats and is driven off as steam. In the control samples this caused greater amounts of spattering. However, when hydrophobin was present the release of this steam was more controlled and hence less explosive. It was also noticed that the noise (sizzling) associated with the frying process was lower in the hydrophobin containing systems compared to the control, again indicating a more controlled.

These improvements in SV2 show that the hydrophobin is not deactivated by the high temperatures and is still able to actively control the release of the extra water added as part of the SV2 measurement.

These experiments show that HFB I work as well as HFB II.

**Claims**

1. Edible oil with an overrun of less than 15%, preferably less than 10%, even more preferably less than 5% which comprises 0.01% to 1% w/w of hydrophobin and wherein the water content is such that the water/hydrophobin weight ratio is less than 1:5, preferably less than 1:10.

2. Edible oil according to claim 1 containing over 0.1 % w/w hydrophobin.

3. Edible oil according to claim 1 or 2 containing less than 0.5% w/w hydrophobin.

4. Edible oil according to any preceding claim wherein the hydrophobin is a class II hydrophobin

5. Edible oil according to claim 4 wherein the hydrophobin is HFB II.

**Patentansprüche**

1. Speiseöl mit einem Overrun von weniger als 15 %, vorzugsweise weniger als 10 %, noch stärker bevorzugt weniger als 5 %, das 0,01 bis 1 Gew.-% Hydrophobin aufweist und wobei der Wassergehalt derart ist, dass das Gewichtsverhältnis von Wasser/Hydrophobin weniger als 1:5, vorzugsweise weniger als 1:10 beträgt.

2. Speiseöl nach Anspruch 1, das mehr als 0,1 Gew.-% Hydrophobin enthält.

**3.** Speiseöl nach Anspruch 1 oder 2,
das weniger als 0,5 Gew.-% Hydrophobin enthält.

**4.** Speiseöl nach einem der vorstehenden Ansprüche,
wobei das Hydrophobin ein Hydrophobin der Klasse II ist.

**5.** Speiseöl nach Anspruch 4,
wobei das Hydrophobin HFB II ist.

**Revendications**

**1.** Huile comestible ayant un dépassement inférieur à 15 %, de préférence inférieur à 10 %, de manière encore préférable inférieur à 5 % qui comprend 0,01 % à 1 % p/p d'hydrophobine et où la teneur en eau est telle que le rapport en poids eau/hydrophobine est inférieur à 1:5, de préférence inférieur à 1:10.

**2.** Huile comestible selon la revendication 1 contenant plus de 0,1 % p/p d'hydrophobine.

**3.** Huile comestible selon la revendication 1 ou 2 contenant moins de 0,5 % p/p d'hydrophobine.

**4.** Huile comestible selon l'une quelconque des revendications précédentes où l'hydrophobine est une hydrophobine de classe II.

**5.** Huile comestible selon la revendication 4 où l'hydrophobine est HFB II.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 477825 A
- EP 771531 A
- US 3946122 A
- US 5436021 A
- WO 0184945 A
- EP 775444 A
- WO 03051136 A
- EP 2052628 A
- WO 0174864 A
- WO 9641882 A
- WO 0157076 A

### Non-patent literature cited in the description

- **H. PARDUN.** *Fette,Seifen, Anstrichmittel,* 1977, vol. 79 (5), 195-203
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol.,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **PEMETTI et al.** *Curr. Opin. Colloid Interface Sci.,* 2007, vol. 12, 221-231